# EUROPÄISCHE PATENTANMELDUNG

(11) **EP 0 631 074 A1**
(43) Veröffentlichungstag der Anmeldung: **28.12.1994**
(21) Anmeldenummer: 94104755.7
(22) Anmeldetag: 25.03.1994
(51) Int. Cl.: F16K 17/04

(54) **Druckbegrenzungsventil**

(30) Priorität: 10.04.1993 DE 4311856
(71) Anmelder: LuK Fahrzeug-Hydraulik GmbH & Co. KG, D-61352 Bad Homburg (DE)
(72) Erfinder: Nguyen, Van Doan, D-60437 Frankfurt (DE); Lauth, Hans-Jürgen, D-61250 Usingen (DE); Overdiek, Gerhard, Dr., D-61381 Friedrichsdorf (DE)
(74) Vertreter: Gleiss, Alf-Olav, Dr.jur. Dipl.-Ing.

(57) **Zusammenfassung**

Die Erfindung betrifft ein Druckbegrenzungsventil mit einem in einem Ventilgehäuse gegen eine Kraft verschiebbar geführten Dichtungselement, das einen eine Durchlaßöffnung eines Ventilsitzes abdichtenden Schließkörper aufweist, mit dem eine geräuscharme Druckbegrenzung möglich ist.

Dazu ist vorgesehen, daß der Schließkörper (32) kugelförmig ausgebildet ist und in eine Ausnehmung des Ventilsitzes (26) eingreift.

## Beschreibung

Die Erfindung betrifft ein Druckbegrenzungsventil mit einem in einem Ventilgehäuse gegen eine Kraft verschiebbar geführten Dichtungselement, das einen eine Durchlaßöffnung eines Ventilsitzes abdichtenden Schließkörper aufweist.

Es ist bekannt, derartige Druckbegrenzungsventile in Lenkhilfpumpen für Kraftfahrzeuge einzusetzen, die dafür sorgen, daß ein in einer Druckleitung zu einem Verbraucher entstehender Überdruck sicher begrenzt Werden kann, indem eine Rückverbindung in einen Tank hergestellt wird. Dies wird dadurch erreicht, daß der Druck in der Druckleitung durch die Durchlaßöffnung in dem Ventilsitz auf das Dichtungselement geführt wird, das in Abhängigkeit des anliegenden Druckes gegen die Kraft einer Feder verschiebbar ist und damit mit seinem Schließkörper die Durchlaßöffnung freigibt.

Es ist bekannt, diesen Schließkörper kegelförmig auszubilden, der in die Durchlaßöffnung des Ventilsitzes eingreift und mit dem Umfang des Kegels gegen eine in der Durchlaßöffnung vorgesehene Kante unter des Druck der Feder dichtend anliegt.

Beim Kegel kommmt es durch ein wiederholtes Aufschlagen der Umfangsfläche des kegeligen Schließkörpers auf die Dichtungskante der Durchlaßöffnung zu verstärkten Abnutzungserscheinungen im Berührungsbereich. Darüber hinaus ist die Herstellung eines kegelförmigen Schließkörpers sehr aufwendig. Weiterhin ist bekannt, daß eine Kugel als Schließkörperkugel gegen die Durchlaßöffnung des Ventilsitzes drückt.

Hierbei ist jedoch nachteilig, daß wenn unter einem entsprechend großen Druck das Dichtungselement mit seinem angeformten Schließkörper zurückgedrängt wird, dieses infolge der axialen Verschiebung des Dichtungselements sofort einen relativ großen Spalt zwischen dem Schließkörper und der Dichtkante der Durchlaßöffnung freigibt, so daß es zu Druckstößen kommen kann, die ein Flattern des Dichtungselements bewirken. Mit dem Flattern ist eine unerwünschte Geräuschentwicklung verbunden.

Der Erfindung liegt daher die Aufgabe zugrunde, ein Druckbegrenzungsventil der gattungsgemäßen Art zu schaffen, mit dem eine flatterfreie Druckentlastung möglich ist.

Erfindungsgemäß wird diese Aufgabe dadurch gelöst, daß der Schließkörper kugelförmig ausgebildet ist und in eine besonders gestaltete Ausnehmung des Ventilsitzes eingreift. Es wurde gefunden, daß durch eine kugelförmige Ausbildung des Schließkörpers und eine entsprechende Anpassung der mit dem Schließkörper zusammenwirkenden, die Abdichtung ergebenden Ausnehmung erreicht werden kann, daß unter Einwirkung eines bestimmten Mindestdruckes der Schließkörper axial gegen eine Kraft, beispielsweise eine Feder, bewegt werden kann und sich dabei nur ein minimaler Durchlaßspalt zwischen der Durchlaßöffnung des Ventilsitzes und dem hinter dem Schließkörper liegenden mit einem Tank in Verbindung stehenden Raum öffnet. Durch diesen sich nur langsam erweiternden Durchlaßspalt wird erreicht, daß kein ruckartiger Druckabbau erfolgt, sondern sich dieser langsam abbaut, so daß ein Flattern des Schließkörpers in der Ausnehmung der Durchlaßöffnung vermieden wird.

In bevorzugter Ausgestaltung der Erfindung ist vorgesehen, daß die kegelförmige Aufweitung der Durchlaßöffnung einen Öffnungswinkel von 15° bis 40°, vorzugsweise von 20° bis 30°, besitzt. Es hat sich gezeigt, daß sich gerade durch diese Wahl des Öffnungswinkels eine sehr vorteilhafte Veränderung der Durchlaßspaltbreite ergibt, die zu einem sicheren und kontinuierlichen, aber druckwellenfreien Abbau des Überdrucks führt.

In weiterer bevorzugter Ausgestaltung der Erfindung ist Vorgesehen, daß der Durchmesser des Schließkörpers zu der Öffnungsweite der Aufweitung so gewählt ist, daß ein zwischen der Wandung der Aufweitung und einer Radialen des Schließkörpers gebildeter rechter Winkel sich innerhalb der Aufweitung befindet. Durch diese geeignete Wahl des Verhältnisses des Durchmessers zu der Öffnungsweite wird erreicht, daß sich der Schließkörper auch im geöffneten Zustand des Druckbegrenzungsventils innerhalb der Aufweitung der Durchlaßöffnung des Ventilsitzes befindet, so daß eine optimale seitliche Führung durch die Strömung des Schließkörpers gebildet ist.

Weitere vorteilhafte Ausgestaltungen der Erfindung ergeben sich aus den in den Unteransprüchen angegebenen Merkmalen.

Die Erfindung wird nachfolgend in Ausführungsbeispielen anhand der Zugehörigen Zeichnungen erläutert. Es zeigen:
- Figur 1: einen Längsschnitt eines Ausschnitts eines Druckbegrenzungsventils und
- Figur 2: einen Längsschnitt eines Ausschnitts eines Druckbegrenzungsventils in einer anderen Ausführung.

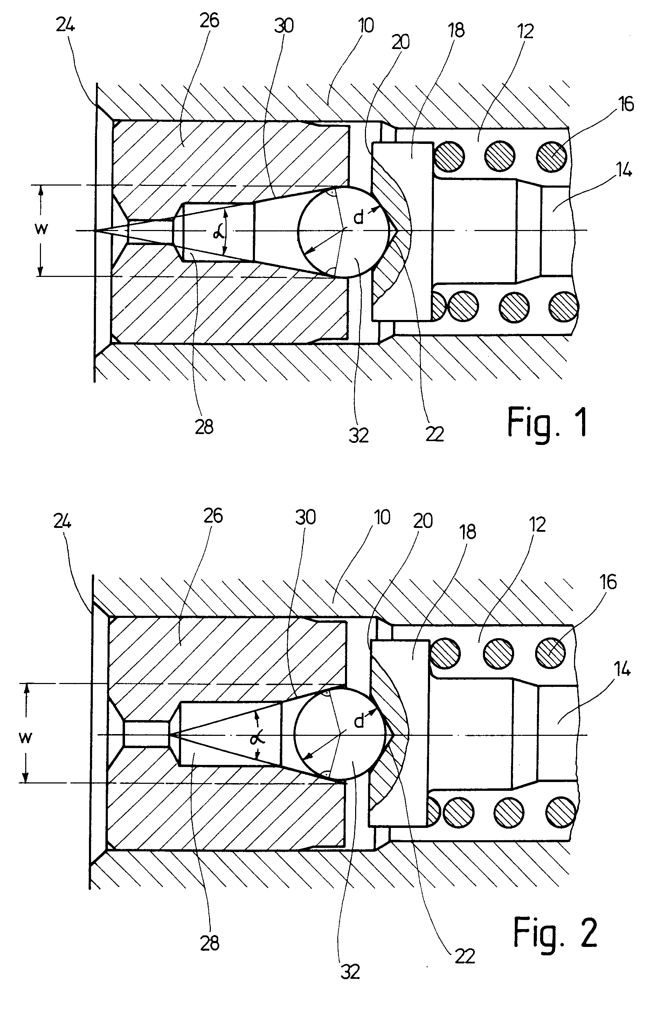

Figur 1 Zeigt im Ausschnitt ein Ventilgehäuse 10, in dem ein sich axial erstreckender Innenraum 12 vorgesehen ist. Innerhalb des Innenraums 12 ist ein Stützelement 14 gegen die Kraft einer Feder 16 axial verschiebbar geführt. Die Feder 16 stützt sich einerseits an einem Bund 18 des Stützelements 14 und andererseits an einem hier nicht dargestellten Grund des Innenraums 12 ab. Der Innenraum 12 ist über eine hier nicht dargestellte Leitung mit einem ebenfalls nicht dargestellten Tank verbunden.

Der Bund 18 ist durchmesserkleiner als der Innenraum 12 und weist an seiner einen Stirnseite 2 eine zum Beispiel kegelige Ausnehmung 22 auf. An einer Stirnseite 24 des Ventilgehäuses 10 ist der Innenraum 12 durch einen Ventilsitz 26 verschlossen. Der Ventilsitz 26 weist eine Durchlaßöffnung 28 auf, die hier, stufenförmig ausgebildet ist und an der dem Dichtungselement 14 zugewandten Seite in eine kegelförmige Aufweitung 30 ausläuft. Die Aufweitung 30 besitzt einen Öffnungswinkel Alpha von 20°. An der Stirnseite 24 führt die Durchlaßöffnung 28 des Ventilsitzes 26 zu einer hier nicht dargestellten Druckleitung, die mit einem ebenfalls nicht dargestellten Verbraucher in Verbindung steht. Innerhalb der Aufweitung 30 des Ventilsitzes 26 ist ein kugelförmiger Schließkörper 32 angeordnet. Der Schließkörper 32 besitzt einen Durchmesser d, der kleiner ist als die Öffnungsweite w der Aufweitung 30 an der dem Stützelement 14 zugewandten Stirnseite des Ventilsitzes 26. Die Umfangsfläche des Schließkörpers 32 greift weiterhin in die Ausnehmung 22 des Bundes 18 ein. Ein sich zwischen der Wandung der Aufweitung 30 und einer Radialen des Schließkörpers 32 ergebender rechter Winkel liegt innerhalb des Ventilsitzes 26.

In Figur 2 ist ein zu Figur 1 analoges Ausführungsbeispiel gezeigt, bei dem jedoch der Öffnungswinkel Alpha der Aufweitung 30 30° beträgt. Alle weiteren Teile entsprechen den in Figur 1 gezeigten und sind mit gleichen Bezugszeichen versehen.

Das in den Figuren 1 und 2 gezeigte Druckbegrenzungsventil übt folgende Funktion aus:
Ein von der nicht dargestellten Öldruckleitung ausgehender Öldruck wirkt durch die Durchlaßöffnung 28 des Ventilsitzes 26 auf den Schließkörper 32. Steigt dieser Öldruck, aus hier nicht näher zu betrachtenden Gründen, über ein vorherbestimmtes Maß an, drückt das Öl so stark auf den Schließkörper 32, daß dieser gegen den Bund 18 des Stützelements 14 drückt und die an den Bund 18 angreifende Feder 16 zusammengedrückt wird.

In diesem Moment wird der Schließkörper 32 so weit zurückgedrückt, daß sich zwischen der Wandung der Aufweitung 30 und dem Schließkörper 32 ein Durchlaßspalt öffnet, der eine Verbindung zwischen der Durchlaßöffnung 28 und dem Innenraum 12 herstellt. Durch diesen Durchlaßspalt kann nunmehr das unter dem erhöhten Druck stehende Öl in den Innenraum 12 und von dort in den nicht dargestellten Tank fließen. Ist der Öldruck soweit abgebaut, daß er den vorherbestimmten Grenzwert nicht mehr überschreitet, wird mittels der Feder 16 und dem Bund 18 der Schließkörper 32 wieder in die Aufweitung 30 hineingedrückt, so daß der Durchlaßspalt zwischen der Durchlaßöffnung 28 und dem Innenraum 12 wieder verschlossen ist. In Abhängigkeit von dem Durchmesser d des Schließkörpers 32 sowie der Öffnungsweite w der Aufweitung 30 sowie dem Öffnungswinkel Alpha der Aufweitung 30 ergibt sich eine maximal mögliche Eindringtiefe des Schließkörpers 32 in die Aufweitung 30. Diese Maße sind so gewählt, daß sich auch bei geöffnetem Schließkörper 32 eine seitliche Führung des Schließkörpers 32 ergibt und der sich einstellende Durchlaßspalt auf der gesamten Umfangsfläche des kugeligen Schließkörpers 32 gleichmäßig einstellt. Durch das Zusammenwirken der kegeligen Wandung der Aufweitung 30 mit dem der kugeligen Umfangsfläche des Schließkörpers 32 wird erreicht, daß sich mit ansteigendem Überdruck, das heißt sich langsam öffnendem Schließkörper 32, nur eine allmähliche Erweiterung des Durchlaßspaltes ergibt. Hierdurch wird erreicht, daß der Überdruck somit nicht schlagartig oder zumindest mit extrem großem Druckgefälle an einer scharfen Kante abgebaut wird, sondern daß sich ein Druckabbau mit stetig ansteigender Kennlinie ergibt. Dies wird insbesondere auch dadurch erreicht, daß der Schließkörper 32 nunmehr eine große Seitenführung besitzt. Durch diese Anordnung wird ein Flattern des Schließkörpers 32 unter dem wirkenden Öldruck vermieden. Durch die Gegenlagerung des Schließkörpers 32 in der Ausnehmung 22 des Bundes 18 ist einerseits eine genaue zentrische Führung des Schließkörpers 32 möglich und andererseits wird eine Kraftübertragung von dem Schließkörper 32 auf den Bund 18 und damit auf die Feder 16 in optimaler Weise gelöst.

Durch die gefundene Anordnung wird erreicht, daß mit einfachen Mitteln, nämlich einem kugeligen Schließkörper 32 sowie einer entsprechenden kegeligen Aufweitung 30, eine stabile geräuscharme Druckbegrenzung möglich ist, indem die Strömung des Öls von der Durchlaßöffnung 28 in den Innenraum 12 optimal eingestellt ist und an der strömungstechnisch günstigen Oberfläche des Schließkörpers 32 gut abströmen kann.

## Patentansprüche

1. Druckbegrenzungsventil mit einem in einem Ventilgehäuse gegen eine Kraft verschiebbar geführten Dichtungselement, das einen eine Durchlaßöffnung eines Ventilsitzes abdichtenden Schließkörper aufweist, **dadurch gekennzeichnet**, daß der Schließkörper (32) kugelförmig ausgebildet ist und innerhalb einer Ausnehmung des Ventilsitzes (26) eingreift.

2. Druckbegrenzungsventil nach Anspruch 1, **dadurch gekennzeichnet**, daß die Ausnehmung eine kegelförmige Aufweitung (30) der Durchlaßöffnung (28) ist.

3. Druckbegrenzungsventil nach einem der vorhergehenden Ansprüche, **dadurch gekennzeichnet**, daß die Aufweitung (30) einen Öffnungswinkel Alpha von 15° bis 40°, vorzugsweise von 20° bis 30°, besitzt.

4. Druckbegrenzungsventil nach einem der vorhergehenden Ansprüche, **dadurch gekennzeichnet**, daß der Schließkörper (32) in einer Ausnehmung (22) des Dichtungselements (14) gegengelagert ist.

5. Druckbegrenzungsventil nach einem der vorhergehenden Ansprüche, **dadurch gekennzeichnet**, daß die Ausnehmung (22) ein kegeliger Einschnitt in einem stirnseitig angeordneten Bund (18) des Dichtungselements (14) ist.

6. Druckbegrenzungsventil nach einem der vorhergehenden Ansprüche, **dadurch gekennzeichnet**, daß der Durchmesser (d) des Schließkörpers (32) zu der Öffnungsweite (w) der Aufweitung (30) so gewählt ist, daß ein zwischen der Wandung der Aufweitung (30) und einer Radialen des Schließkörpers (32) gebildeter rechter Winkel sich innerhalb der Aufweitung (30) befindet.

7. Druckbegrenzungsventil nach einem der vorhergehenden Ansprüche, **dadurch gekennzeichnet**, daß sich der rechte Winkel zwischen einer Radialen des Schließkörpers (32) und der Wandung der Aufweitung (30) auch im durchströmten Zustand des Druckbegrenzungsventils innerhalb der Aufweitung (30) befindet.
